# EUROPÄISCHE PATENTSCHRIFT

(11) **EP 1 602 872 B1**
(45) Veröffentlichungstag und Bekanntmachung des Hinweises auf die Patenterteilung: **18.02.2009**
(21) Anmeldenummer: 05103916.2
(22) Anmeldetag: 11.05.2005
(51) Int. Cl.: F16L 55/115

(54) **System aus Ventil und Schutzkappe**
Assembly of a valve and a protection cap
Arrangement d'une soupape et d'une couvercle de protection

(30) Priorität: 04.06.2004 DE 102004027479
(43) Veröffentlichungstag der Anmeldung: 07.12.2005
(73) Patentinhaber: ContiTech Kühner GmbH & Cie. KG, 71570 Oppenweiler (DE)
(72) Erfinder: Klinke, Thomas, 71549, Auenwald (DE); Röck, Claus, 71579, Spiegelberg (DE)
(74) Vertreter: Finger, Karsten

(56) Entgegenhaltungen:
- DE-A1- 3 433 206
- DE-U1- 9 411 378
- GB-A- 1 415 840
- US-A- 5 269 342

## Beschreibung

Die Erfindung betrifft ein System aus einem Ventil und einer Schutzkappe nach dem Oberbegriff des Anspruchs 1.

Ventile zum Befüllen von Leitungen eines geschlossenen Fluidkreislaufs, in dem das Fluid ein Gas und/oder eine Flüssigkeit ist, sind in diversen Ausführungen bekannt. So zeigt die DE 41 06 314 C2 ein Verschlussteil für Rohrstutzen an einer Wasserumwälzpumpe in Kraftfahrzeugen, die eine in der Pumpe befindliche Flüssigkeit am Austreten hindert. Die US 5 464 114 zeigt eine Schutzkappe für Gasanschlüsse, beispielsweise in Laboratorien, die verhindert, dass Fremdobjekte in den Anschluss einbringbar sind.

Ein System mit den Merkmalen des Oberbegriffs des Anspruchs 1 ist aus DE 94 11 378 U bekannt.

Für die Befüllung einer Kühlmittelleitung einer Kraftfahrzeug-Klimaanlage mit Kühlmittel wird üblicherweise eine Befüllvorrichtung verwendet, die auf das freie, also auf das nicht mit der Kühlmittelleitung verbundene Ende des Ventils aufgesetzt und arretiert wird. Zur Arretierung der Befüllvorrichtung am Ventil weist das freie Ende des Ventils entlang einer vorgegebenen Länge ein vorgegebenes Außenprofil auf, das üblicherweise in Form von Wellen und Tälern ausgebildet ist.

Nach dem Entfernen der Befüllvorrichtung wird das Ventil mit einer Schutzkappe versehen, die auf das freie Ende des Ventils aufgeschraubt oder aufgesteckt wird, um die Ventilöffnung am freien Ende des Ventils vor Schmutz und anderen die Ventilfunktion negativ beeinflussenden Stoffen zu schützen. Übliche Schutzkappen weisen einen hohlzylindrischen Körper auf, der an einem Ende vschlossen ist. Diese Verschlüsse bestehen üblicherweise aus thermoplastischen Elastomeren wie EPDM oder Naturkautschuk (NBR) sowie aus Kunststoffen wie Polyethylen (PE) oder Polypropylen (PP).

In der DE 34 33 206 A1 ist eine derartige Schutzkappe für Schlauchsteckkupplungen offenbart, die die eine Schiebehülse und einen Sicherungsring aufweisende Kupplungseinrichtung abdeckt, indem sie über dem Sicherungsring einschnappt. Zusätzlich ist die Schutzkappe mit einer Halteschlaufe an der Kupplung befestigt, damit die Kappe nach dem Abziehen von der Kupplungseinrichtung nicht verloren geht.

Es hat sich jedoch in der Praxis gezeigt, dass ein derartiger Schutz des Ventils nur unzureichend ist und insbesondere das Außenprofil des Ventils relativ schnell korrodiert, da in den Spalt, der zwischen der Kupplung und der Schutzkappe gebildet ist, Feuchtigkeit hineinkriecht und damit die Korrosion begünstigt. Die Korrosion führt dazu, dass die Arretierung der Befüllvorrichtung am freien Ende des Ventils beeinträchtigt wird, so dass das Ventil oder schlimmstenfalls die gesamte Kühlmittelleitung mit Ventil ausgetauscht werden muss.

Der Erfindung liegt daher die Aufgabe zugrunde, den Korrosionsschutz von Ventilen der eingangs genannten Art, welche mit einer Schutzkappe versehen sind, zu verbessern.

Diese Aufgabe wird bei einem System nach dem Oberbegriff des Anspruchs 1 durch die im kennzeichnenden Teil des Anspruchs 1 angegebenen Merkmale gelöst. Weiterbildungen und vorteilhafte Ausgestaltungen der Erfindung ergeben sich aus den Unteransprüchen.

Das erfindungsgemäße System umfasst ein Ventil, das mit einem Ende mit der Leitung eines geschlossenen Fluidkreislaufs verbunden ist, und eine Schutzkappe, die auf das freie Ende, also auf das nicht mit der Leitung verbundene Ende des Ventils aufgeschraubt oder aufgesteckt ist. Das freie Ende des Ventils ist nach Entfernen der Schutzkappe mit einer Befüll- und/oder Absaugvorrichtung verbindbar und weist zu diesem Zweck ein zur Arretierung der Befüll- und/oder Absaugvorrichtung notwendiges und über eine bestimmte Länge entsprechend ausgebildetes Außenprofil auf. Erfindungsgemäß ist am Ende, auf der zur Leitung weisenden Seite des zur Arretierung der Befüll- und/oder Absaugvorrichtung notwendigen Außenprofils ein Dichtkörper zwischen Ventil und Schutzkappe angeordnet.

Durch den an dieser Stelle angeordneten Dichtkörper wird auf überraschend einfache Weise verhindert, dass Schmutz und andere korrosionsfördernde Stoffe mit dem zur Arretierung der Befüll- und/oder Absaugvorrichtung notwendigen Außenprofil des Ventils in Kontakt kommen. Dadurch wird eine Korrosion des Außenprofils sicher vermieden und ein mehrmaliges Befüllen oder Absaugen des Fluidkreislaufs dauerhaft ermöglicht.

Die Erfindung macht sich hierbei die Erkenntnis zunutze, dass bei den herkömmlich aufgeschraubten oder aufgesteckten Schutzkappen immer ein sehr kleiner Spalt zwischen Ventil und Schutzkappe verblieb, der aufgrund seiner Kapillarwirkung die Korrosion des Außenprofils förderte. Durch die Anordnung des Dichtkörpers an der erfindungsgemäßen Stelle wird erreicht, dass weder Schmutz noch andere korrosionsfördernde Stoffe in diesen Spalt gelangen können.

Eine Weiterbildung sieht vor, dass das Ventil in seinem Außenumfang eine Nut, vorzugsweise eine Ringnut aufweist, in welcher der Dichtkörper, vorzugsweise ein Dichtring, besonders bevorzugt ein O-förmiger Dichtring, angeordnet ist.

Vorteilhaft wird durch eine derartige bevorzugte Ausbildung das Schraubdrehmoment der aufzuschraubenden Schutzkappe oder das Steckmoment der aufzusteckenden Schutzkappe nur geringfügig erhöht.

Das Ventil kann erfindungsgemäß aus einem Nichteisen-Metall, vorzugsweise Aluminium oder Messing, einem eisenhaltigen Metall, vorzugsweise Stahl oder Edelstahl, oder aus Kunststoff besteht.

Eine vorteilhafte Ausgestaltung der Erfindung sieht vor, dass die Leitung, mit der das Ventil verbunden ist, eine Kühlmittelleitung einer Klimaanlage, insbesondere einer Kraftfahrzeug-Klimaanlage, ist.

Nachfolgend wird die Erfindung anhand eines Ausführungsbeispiels erläutert, das in der Zeichnung dargestellt ist. In dieser zeigen:
- Fig. 1: das erfindungsgemäße System aus Ventil und Schutzkappe, wobei die Schutzkappe vom Ventil abgenommen ist und
- Fig. 2: das erfindungsgemäße System aus Ventil und Schutzkappe, wobei die Schutzkappe auf das Ventil aufgesteckt ist.

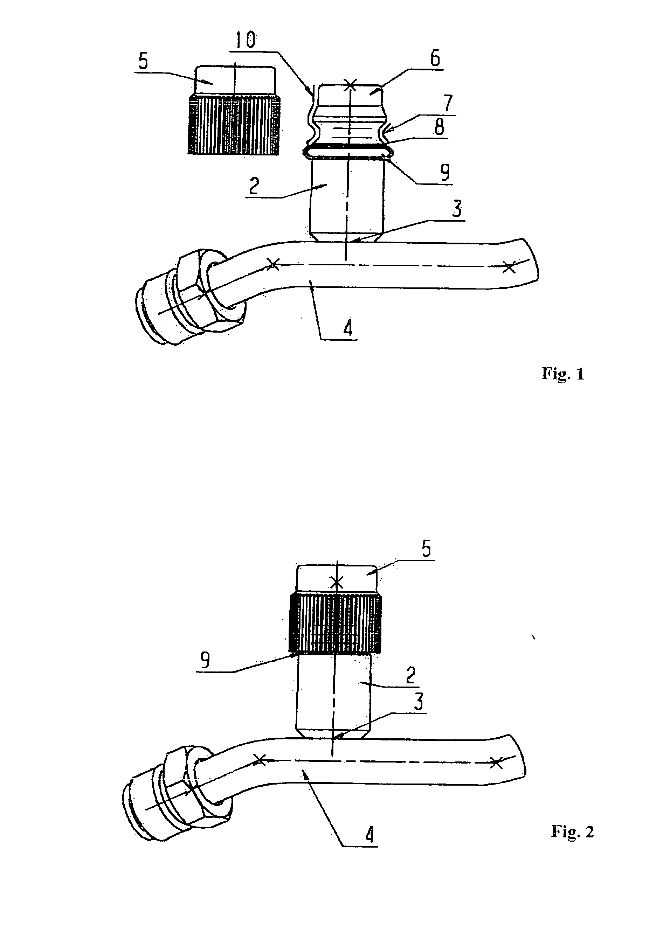

Wie in Fig. 1 dargestellt, umfasst das erfindungsgemäße System 1 ein Ventil 2, das mit einem Ende 3 mit der Kühlmittelleitung 4 eines geschlossenen Fluidkreislaufs einer hier nicht dargestellten Kraftfahrzeug-Klimaanlage verbunden ist, und eine Schutzkappe 5, die auf das freie Ende 6, also auf das nicht mit der Leitung 4 verbundene Ende 3 des Ventils 2 aufgeschraubt oder aufgesteckt ist, wobei in Fig. 1 zur besseren Darstellung des erfindungsgemäßen Systems 1 die Schutzkappe 5 vom freien Ende 6 des Ventils 2 abgenommen ist.

Das freie Ende 6 des Ventils 2 ist nach dem Abnehmen der Schutzkappe 5 mit einer hier nicht dargestellten Befüll- und/oder Absaugvorrichtung verbindbar. Zu diesem Zweck weist das freie Ende 6 des Ventils 2 ein zur Arretierung der Befüll- und/oder Absaugvorrichtung notwendiges und über eine bestimmte Länge entsprechend ausgebildetes Außenprofil 7 auf. Vorliegend ist das Außenprofil 7 durch verschiedene Wellen und Täler gebildet. Die Länge des das Außenprofil 7 aufweisenden freien Endes 6 des Ventils 10 wird durch die in Fig. 1 hilfsweise eingefügte Klammer 10 veranschaulicht.

Erfindungsgemäß ist am Ende 8, auf der zur Leitung 4 weisenden Seite des zur Arretierung der Befüll- und/oder Absaugvorrichtung notwendigen Außenprofils 7 ein Dichtring 9 vorgesehen, wobei das Ventil 2 hierzu in seinem Außenumfang eine Nut aufweist, in welcher der Dichtring 9 angeordnet ist.

Nach dem Aufstecken der Schutzkappe 5 auf das freie Ende 6 des Ventils 2 ist der Dichtring 9 zwischen Ventil 2 und Schutzkappe 5 angeordnet, so dass ein Eindringen von Schmutz und anderen die Korrosion des Ventils fördernden Stoffen im Bereich des zur Arretierung der Befüll- und/oder Absaugvorrichtung notwendigen Außenprofils 7 verhindert wird.

Dieser Zustand, in dem die Schutzkappe 5 auf das freie Ende 6 des Ventils 2 aufgesteckt ist, wird in Fig. 2 dargestellt. Da die gleichen Bezugsziffern in Fig. 1 und Fig. 2 die gleichen Bauteile bezeichnen, kann zur Beschreibung des in Fig. 2 dargestellten Systems 1 auf die Ausführungen zu Fig. 1 verwiesen werden.

### Bezugszeichenliste (ist Bestandteil der Beschreibung)

- 1: System
- 2: Ventil
- 3: verbundenes Ende
- 4: Leitung
- 5: Schutzkappe
- 6: freies Ende
- 7: Außenprofil
- 8: Ende des Außenprofils
- 9: Dichtkörper
- 10: Klammer

## Patentansprüche

1. System (1) aus einem Ventil (2), das mit einem Ende (3) mit der Leitung (4) eines geschlossenen Fluidkreislaufs verbunden ist, und aus einer Schutzkappe (5), die auf das freie Ende (6), also auf das nicht mit der Leitung (4) verbundene Ende (3) des Ventils (2) aufgeschraubt oder aufgesteckt ist, wobei das freie Ende (6) des Ventils (2) nach Entfernen der Schutzkappe (5) mit einer Befüll- und/oder Absaugvorrichtung verbindbar ist und zu diesem Zweck ein zur Arretierung der Befüll- und/oder Absaugvorrichtung notwendiges und über eine bestimmte Länge entsprechend ausgebildetes Außenprofil (7) aufweist, **dadurch gekennzeichnet, dass** am Ende (8), auf der zur Leitung (4) weisenden Seite des zur Arretierung der Befüll- und/oder Absaugvorrichtung notwendigen Außenprofils (7) ein Dichtkörper (9) zwischen dem Ventil (2) und der Schutzkappe (5) angeordnet ist.

2. System (1) nach Anspruch 1, **dadurch gekennzeichnet, dass** das Ventil (2) in seinem Außenumfang eine Nut aufweist, in welcher der Dichtkörper (9) angeordnet ist.

3. System (1) nach Anspruch 2, **dadurch gekennzeichnet, dass** die Nut eine Ringnut ist.

4. System (1) nach einem der Ansprüche 1 bis 3, **dadurch gekennzeichnet, dass** der Dichtkörper (9) ein Dichtring, vorzugsweise ein O-Dichtring ist.

5. System (1) nach einem der Ansprüche 1 bis 4, **dadurch gekennzeichnet, dass** das Ventil (2) aus einem Nichteisen-Metall, vorzugsweise Aluminium oder Messing, einem eisenhaltigen Metall, vorzugsweise Stahl oder Edelstahl, oder aus Kunststoff besteht.

6. System (1) nach einem der Ansprüche 1 bis 5, **dadurch gekennzeichnet, dass** die Leitung (4) eine Kühlmittelleitung einer Klimaanlage, insbesondere einer Kraftfahrzeug-Klimaanlage, ist.

## Claims

1. System (1) composed of a valve (2), which is connected by one end (3) to the line (4) of a closed fluid circuit, and of a protection cap (5), which is screwed or plugged onto the free end (6) of the valve (2), that is to say onto the end (3) which is not connected to the line (4), wherein the free end (6) of the valve (2) can be connected to a filling device and/or extraction device after the protection cap (5) has been removed, and for this purpose has an external profile (7) which is necessary for locking the filling device and/or extraction device and is of corresponding design over a specific length, **characterized in that** a sealing body (9) is arranged between the valve (2) and the protection cap (5) at the end (8) on the side, pointing to the line (4), of the external profile (7) which is necessary to lock the filling device and/or extraction device.

2. System (1) according to Claim 1, **characterized in that** the valve (2) has, in its external circumference, a groove in which the sealing body (9) is arranged.

3. System (1) according to Claim 2, **characterized in that** the groove is an annular groove.

4. System (1) according to one of Claims 1 to 3, **characterized in that** the sealing body (9) is a sealing ring, preferably an O-sealing ring.

5. System (1) according to one of Claims 1 to 4, **characterized in that** the valve (2) is composed of a non-ferrous metal, preferably aluminium or brass, a ferrous metal, preferably steel or stainless steel, or of plastic.

6. System (1) according to one of Claims 1 to 5, **characterized in that** the line (4) is a coolant line of an air conditioning system, in particular of a motor vehicle air conditioning system.

## Revendications

1. Système (1) constitué d'une soupape (2) qui est connectée à une extrémité (3) à la conduite (4) d'un circuit de fluide fermé, et d'un capuchon de protection (5) qui est vissé ou enfoncé sur l'extrémité libre (6), c'est-à-dire sur l'extrémité (3) de la soupape (2) non connectée à la conduite (4), l'extrémité libre (6) de la soupape (2), après l'enlèvement du capuchon de protection (5), pouvant être connectée à un dispositif de remplissage et/ou d'aspiration et présentant à cet effet un profilé extérieur (7) nécessaire pour le blocage du dispositif de remplissage et/ou d'aspiration et réalisé en conséquence sur une longueur prédéterminée, **caractérisé en ce qu'**à l'extrémité (8) du côté, tourné vers la conduite (4), du profilé extérieur (7) nécessaire pour le blocage du dispositif de remplissage et/ou d'aspiration, on dispose un corps d'étanchéité (9) entre la soupape (2) et le capuchon de protection (5).

2. Système (1) selon la revendication 1, **caractérisé en ce que** la soupape (2) présente dans sa périphérie extérieure une rainure dans laquelle est disposé le corps d'étanchéité (9).

3. Système (1) selon la revendication 2, **caractérisé en ce que** la rainure est une rainure annulaire.

4. Système (1) selon l'une quelconque des revendications 1 à 3, **caractérisé en ce que** le corps d'étanchéité (9) est une bague d'étanchéité, de préférence un joint torique.

5. Système (1) selon l'une quelconque des revendications 1 à 4, **caractérisé en ce que** la soupape (2) se compose d'un métal non ferreux, de préférence de l'aluminium ou du laiton, d'un métal contenant du fer, de préférence de l'acier ou un acier noble, ou de plastique.

6. Système (1) selon l'une quelconque des revendications 1 à 5, **caractérisé en ce que** la conduite (4) est une conduite de réfrigérant d'une installation de climatisation, notamment d'une installation de climatisation d'un véhicule automobile.
